# EUROPEAN PATENT APPLICATION

(11) **EP 3 196 455 A1**
(43) Date of publication of application: **26.07.2017**
(21) Application number: 17151926.7
(22) Date of filing: 18.01.2017
(51) Int. Cl.: F02M 23/00, F02M 23/08, B05B 1/06, F02B 37/10, F02B 37/04, F02B 29/00

(54) **COMPRESSED AIR INTAKE ENGINE INLET BOOSTER**

(30) Priority: 19.01.2016 US 201615001178
(71) Applicant: International Engine Intellectual Property Company, LLC, Lisle, Illinois 60532 (US)
(72) Inventor: Siuchta, Grzegorz, 60016 Des Plaines, IL (US)
(74) Representative: Kuhnen & Wacker

(57) **Abstract**

An inlet fluid booster system for an internal combustion engine having engine cylinders includes a compressed fluid supply source that is in upstream fluid communication with the engine cylinders. A fluid booster is in downstream fluid communication with the compressed fluid supply source for selectively introducing compressed auxiliary fluid from the compressed fluid supply source. The auxiliary fluid is selectively introduced from the fluid booster to have a velocity vector towards the engine cylinders that is greater than a velocity vector away from the engine cylinders.

## Description

### FIELD OF THE INVENTION

This invention relates to boosting intake air in internal combustion engines, including but not limited to turbocharged engines.

### BACKGROUND

The United States and the European Union have proposed stricter diesel exhaust emission regulations, particularly with respect to levels of Nitrous Oxides (NOx) and particulate matter, sometimes referred to as soot, that may be contained in engine emissions. A variety of differing strategies have been tried to bring these emissions into compliance, many of which have focused on treatments applied to the exhaust gas to remove NOx or particulate matter that has already formed. However, these approaches add costly systems, such a selective catalyst reduction (SCR) systems to remove NOx, and particulate filters to remove particulate matter. Other approaches attempt to limit the levels of NOx and particulate matter that is formed during the combustion process itself, by more precisely controlling the combustion of the fuel.

On a diesel engine operating at variable exhaust gas recirculation (EGR) rates for control of NOx levels, the air/fuel ratio can fall to very low levels when accelerating from idle. The low air/fuel ratio can produce both a lower power condition, and a heavy smoke condition. EGR flow during the acceleration degrades turbocharger response time, a delay also known as "turbo lag." Turbo lag occurs during the period of time when there is an increased power demand before the rotary compressor driven by the exhaust gas turbine reaches its full power capacity.

Prior art systems have attempted to overcome turbo lag by momentarily closing the EGR valve. However, shutting off the flow of EGR will produce an increase in NOx levels, which becomes significant when considering a .2gm/bph-hr limit of NOx. Lower NOx limits, due to stricter diesel exhaust emissions regulations from the Untied States Environmental Protection Agency (EPA), make the momentary closing of the EGR valve less desirable as a solution to decrease turbo lag.

Other prior art methods for reducing turbo lag are discussed in U.S. Patent No. 6,178,749 and 5,771,695. U.S. Patent No. 6,178,749 describes a method for reducing turbo lag comprising generating an EGR control signal for incrementally adjusting the position of the EGR valve and turbocharger turbine based on current intake manifold pressure and airflow, and the desired intake manifold pressure and airflow for the desired fueling rate. U.S. patent 5,771,695 describes a method for improving the time response of a turbo-compressor assisted internal combustion engine where the turbo-compressor is driven by an electric motor at a speed somewhat less than its full-load operating speed until such time as the turbo-compressor is driven at a higher speed by an exhaust gas turbine.

Air or other fluid compression systems have long been used on trucks and other commercial vehicles to power air brakes, and other air operated auxiliaries such as an air clutch system. The vehicle air system has an air compressor which supplies air to a wet tank in fluid connection with additional air tanks, which may be assembled according to U.S. Patent No. 6,082,408. The engine driven compressor is powered by the crankshaft pulley via a belt, or directly off of the engine timing gears. Compressed air is usually cooled by passing the air through a cooling coil, and into an air dryer to remove moisture, oil, and other impurities before it reaches a purge reservoir or wet tank. Air brake compressors operate continuously to fill air tanks to a predetermined pressure, usually about 120 psi. Once the tanks are brought up to pressure, the excess air, known as "waste air" is regulated off.

The present inventors have recognized the need for a system that allows for improved engine efficiency and provides a quicker turbocharger response time while maintaining NOx emissions at levels within diesel emission regulation guidelines.

The present inventors have recognized the need for a system that utilizes waste energy in the form of air from the air braking system to improve performance, and reduce trap soot loading without interfering with normal engine operation.

The present inventors have recognized the need for an invention that helps meet EPA emission standards by improving control of combustion to limit the formation of regulated exhaust emissions.

### SUMMARY

An inlet fluid booster system for an internal combustion engine having engine cylinders includes a compressed fluid supply source that is in upstream fluid communication with the engine cylinders. A fluid booster is in downstream fluid communication with the compressed fluid supply source for selectively introducing compressed auxiliary fluid from the compressed fluid supply source. The auxiliary fluid is selectively introduced from the fluid booster to have a velocity vector towards the engine cylinders that is greater than a velocity vector away from the engine cylinders.

An inlet fluid booster system for an internal combustion engine having an air inlet passage in upstream fluid communication from an intake manifold, where the intake manifold is upstream of engine cylinders, includes a compressed fluid supply source. The compressed fluid supply source is in upstream fluid communication with the intake manifold. A fluid booster is in downstream fluid communication with the compressed fluid supply source, where the fluid booster is in upstream fluid communication with the engine cylinders. A control valve is upstream of the fluid booster for selectively permitting the flow of compressed auxiliary fluid from the compressed fluid supply source to the fluid booster. The selective introduction of compressed auxiliary fluid from the fluid booster draws an increased flow of boost air through the air inlet passage to the intake manifold.

A method of boosting air to an internal combustion engine having an air inlet passage in fluid connection with engine cylinders includes the steps of fluidly connecting a compressed fluid supply source that supplies compressed fluid to the engine cylinders, and selectively delivering the compressed auxiliary fluid to the engine cylinders. The method also includes the step of drawing boost air through the air inlet passage when the compressed auxiliary fluid is delivered upstream of the engine cylinders.

Another system for boosting air to an internal combustion engine having engine cylinders includes a compressed fluid supply source in upstream fluid communication with the engine cylinders. Auxiliary fluid is selectively introduced from the compressed fluid supply source to a location upstream of the engine cylinders. The introduced auxiliary fluid has a velocity vector towards the engine cylinders that is greater than a velocity vector away from the engine cylinders.

A method of manufacturing an inlet fluid booster system for a vehicle with an internal combustion engine having an intake manifold includes the steps of mounting a compressed fluid supply source to the vehicle, connecting an inlet supply pipe to the intake manifold, and connecting an EGR conduit to the inlet supply pipe. The method also includes the steps of installing a fluid booster at least one of the inlet supply pipe and the EGR conduit, and connecting the compressed fluid supply source and the fluid booster.

A method of using a fluid booster includes the steps of communicating a compressed fluid from a fluid source to the fluid booster under transient engine loading conditions, and introducing the compressed fluid from the fluid booster to a fluid passageway upstream of an engine cylinder. The compressed fluid is introduced from the fluid booster to have a velocity vector towards the engine cylinder that is greater than a velocity vector away from the engine cylinder

A method of operating an inlet fluid booster in an intake system of an internal combustion engine is provided. A difference between air flow conditions within an air intake system and a stored minimum air flow based upon existing engine operating conditions is determined. The difference between air flow conditions within the air intake system and the stored minimum air flow based upon existing engine operating conditions is compared to a first threshold value and a second threshold value. Fluid flow from an inlet fluid booster is initiated when an outcome of the comparing the difference between air flow conditions within the air intake system and the stored minimum air flow based upon existing engine operating conditions is less than the first threshold value. Fluid flow from the inlet fluid booster is deactivated when an outcome of the comparing the difference between air flow conditions within the air intake system and the stored minimum air flow based upon existing engine operating conditions is greater than the second threshold value.

Numerous other advantages and features of the present invention will become readily apparent from the following detailed description of the invention and the embodiments thereof, from the claims and from the accompanying drawings.

### BRIEF DESCRIPTION OF THE DRAWINGS

Figure 1 is a schematic diagram of a turbocharged engine.
Figure 2 is a schematic diagram of a turbocharged engine with a fluid booster system.
Figure 3 is a schematic diagram of a fluid booster.
Figure 4 is a schematic diagram of one embodiment of a control system that may be used with the inlet fluid booster system.
Figure 5 is a schematic diagram of an engine with an alternate embodiment of the fluid booster system.
Figure 6 is a schematic diagram of an engine with an alternate embodiment of the fluid booster system.
Figure 7 is a schematic diagram of an engine with an alternate embodiment of the fluid booster system.
Figure 8 is a schematic diagram of an engine with an alternate embodiment of the fluid booster system.
Figure 9 is a schematic diagram of an engine with an alternate embodiment of the fluid booster system.
Figure 10 is a schematic diagram of a engine with an alternate embodiment of the fluid booster system.
Figure 11 is a schematic diagram of an engine with an alternate embodiment of the fluid booster system.
Figure 12 is a schematic diagram of an engine with an alternate embodiment of the fluid booster system.
Figure 13 is a schematic diagram of an engine with an alternate embodiment of the fluid booster system.
Figure 14 is a schematic diagram of an engine with an alternate embodiment of the fluid booster system.
Figure 15 is a schematic diagram of the fluid booster located on a curved portion of an inlet supply pipe.
Figure 16 is a schematic diagram of an alternate embodiment of fluid booster.
Figure 17 is a schematic diagram of another alternate embodiment of fluid booster.
Figure 18 is a schematic diagram of a further alternate embodiment of fluid booster.
Figure 19 is a functional diagram of a control system for an inlet fluid booster.

### DETAILED DESCRIPTION

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

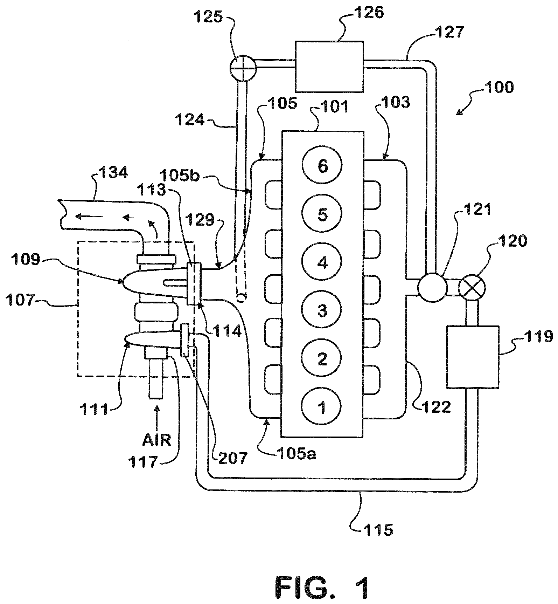

An engine 100 is shown schematically in Figure 1. The engine 100 has a block 101 that includes a plurality of cylinders numbered 1 through 6. The cylinders in the block 101 are fluidly connected to an intake system 103 and to an exhaust system 105. The exhaust system includes a first pipe 105a from cylinders 1, 2 and 3 of one bank of cylinders and a second pipe 105b from cylinders 4, 5 and 6. Although an inline arrangement of six cylinders is illustrated, inline, V-arrangements, or other arrangements of plural cylinders of any number of cylinders are also encompassed by the invention.

A turbocharger 107 includes a turbine 109. The turbine 109 shown has a single turbine inlet port 113 connected to the exhaust system 105, however other numbers of inlet ports are possible, such as in a divided turbocharger. The turbocharger 107 includes a compressor 111 connected to the intake system 103 through an inlet air passage 115.

During operation of the engine 100, air may enter the compressor 111 through an air inlet 117. Compressed air may exit the compressor 111 through an outlet 207, pass through the inlet air passage 115, and pass through an optional charge air cooler 119 and an optional inlet throttle 120 before entering an intake air mixer 121 and an intake air manifold 122 of the intake system 103. The compressed air enters the engine cylinders 1-6.

A stream of exhaust gas from the exhaust system 105 may be routed through an exhaust gas recirculation (EGR) passage or conduit 124, may be routed through an EGR valve 125, may be routed through an EGR cooler 126, and may pass through a further EGR conduit 127 before meeting and mixing with air from the inlet throttle 120 at the mixer 121, however other configurations of EGR system are possible.

The inlet port 113 of the turbine 109 may be connected to the exhaust pipes 105a, 105b in a manner that forms a distribution manifold 129. Exhaust gas passing through the turbine 109 may exit the engine 100 through a tailpipe 134. Emissions and sound treating components can be arranged to receive the exhaust gas from the tailpipe, before exhausting to the atmosphere, as is known.

At times when the EGR valve 125 is at least partially open, exhaust gas flows through pipes 105a, 105b through the conduit 124, through the EGR valve 125, through the EGR cooler 126, through the further conduit 127 and into the mixer 121 where it mixes with air from the inlet throttle 120. An amount of exhaust gas being re-circulated through the EGR valve 125 may depend on a controlled opening percentage of the EGR valve 125.

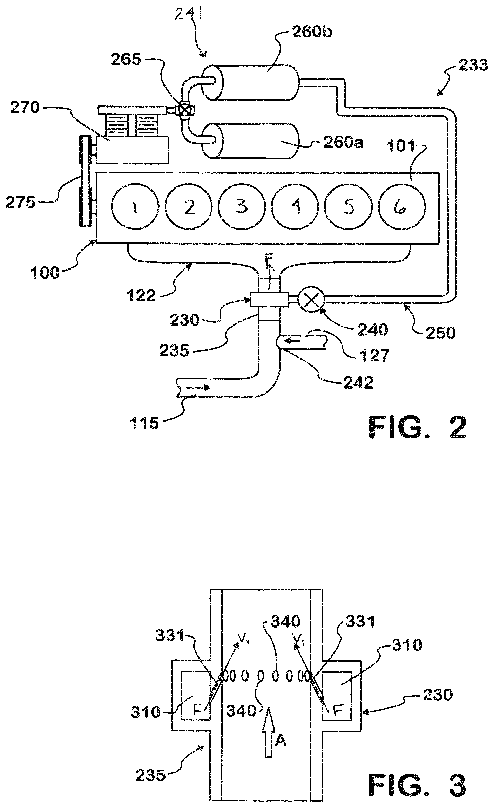

Figure 2 illustrates an internal combustion engine 100, preferably a diesel engine, using an inlet fluid booster system 233. In one embodiment, compressed air from the turbocharger 107 (Figure 1) enters the intake manifold 122 via the inlet air passage 115. EGR flow may be carried towards the inlet air passage 115 via the conduit 127, which intersects with the inlet air passage 115 at an EGR intersection 242, or alternately in a mixer 121, as shown in Figure 1. At the EGR intersection 242, the inlet air passage 115 receives EGR from the EGR conduit 127, and flows through an inlet supply pipe 235 to the intake manifold 122.

The inlet fluid booster system 233 provides for a boost of auxiliary fluid F, such as air, into a manifold inlet supply pipe 235, which may be located downstream of the EGR intersection 242. The booster system 233 includes a fluid booster 230, a control valve 240, and a compressed fluid supply source 241. The fluid F may be air, however any fluid that allows for engine operation is possible.

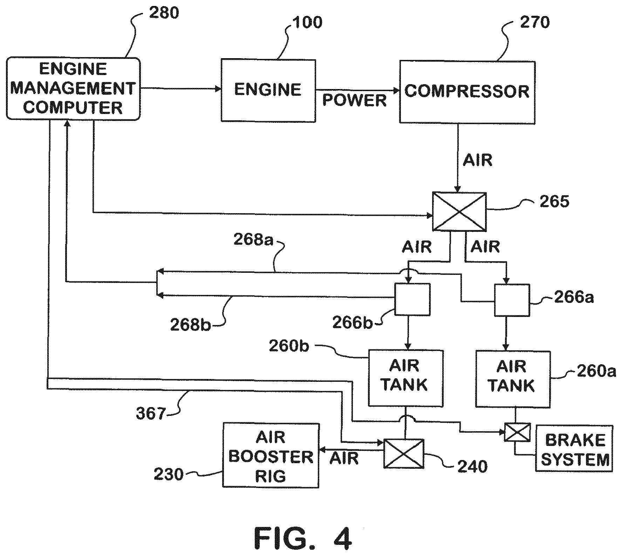

The compressed fluid supply source 241 may include compressed air or other compressed fluids in at least one fluid tank 260, such as an air tank. As shown in Figure 2, the compressed fluid supply source 241 includes a fluid tank 260b, which flows along a compressed fluid supply pipe 250 to reach the inlet fluid booster 230. A fluid compressor 270 provides compressed fluid to fluid tank 260a and fluid tank 260b. The compressor 270 is powered by the engine 100 via a driving mechanism 275, which can be a belt connected to the crankshaft pulley, or directly off of the engine timing gears. Fluid exiting the fluid compressor 270 is regulated by a fluid tank valve assembly 265 to enter into either fluid tank 260a, or fluid tank 260b. Fluid tank 260a is a fluid tank for storing pressurized fluid for operating fluid braking mechanisms in the vehicle, such as air brakes, or for operating additional systems in the vehicle. Pressure sensors 266a, 266b (Figure 4) are used to measure the fluid pressure in fluid tanks 260a and 260b respectively. Fluid pressure in fluid tank 260a for braking systems in the vehicle is usually maintained at about 120 psi, although other pressures are possible. Excess compressed fluid not needed to maintain the fluid tank 260a pressure at 120 psi is channeled into fluid tank 260b via fluid tank valve assembly 265 as part of the fluid supply source for the inlet fluid booster system.

Fluid tank valve assembly 265 regulates the flow of fluid from fluid tank 260b to compressed fluid supply pipe 250. Alternatively, a different valve can be used to regulate the flow from the fluid tank 260b to the compressed fluid supply pipe 250.

While the compressed fluid supply source 241 includes one or more fluid tanks 260a and 260b that are associated with the fluid compressor 270 for providing compressed fluid to the fluid brakes, it is possible that other sources of compressed fluid may be used in addition to the fluid tanks 260a, 260b, or instead of the fluid tanks. Examples of other compressed fluid supply sources 241 include fluid tanks used for auxiliary systems in the vehicle, dedicated fluid tanks for the booster system 233, or any combination of fluid tanks for fluid brakes, fluid tanks for auxiliary systems, and dedicated tanks. It is possible that any source of fluid on the vehicle may be used as the compressed fluid supply source 241, and the compressed fluid supply source may be regulated by valves.

The fluid supply pipe 250 carries the compressed auxiliary fluid F to the fluid booster 230. Flow of compressed fluid F to the fluid booster 230 is regulated using a control valve 240, which may be disposed along the compressed fluid supply pipe 250 upstream of the fluid booster 230.The control valve 240 may be a high volume control valve, and may be controlled by the engine management computer (EMC) 280 (Figure 4). Compressed auxiliary fluid F flows along the compressed fluid supply pipe 250 to the fluid booster 230 when the EMC 280 sends a signal to activate, or open the control valve 240. The duration and extent of opening of the control valve 240, in combination with the pressure in the fluid supply source 241, controls the amount of compressed fluid F to the fluid booster 230. There may be operating conditions when the amount of compressed fluid F to the fluid booster 230 may be limited, for example when there is a low volume of compressed fluid F in the fluid supply source 241, and the extent and duration of opening of the control valve 240 may be variable. Quick, multiple pulses of compressed fluid F are emitted from the fluid booster 230, the frequency of pulses depending on the acceleration rate (engine demand) and the flow rate of the compressed fluid F. Alternately, the compressed fluid F may be emitted from the fluid booster 230 in a short continuous stream.

Once the compressed fluid F reaches the fluid booster 230, it enters the manifold inlet supply pipe 235 upstream of the intake manifold 122 via a plurality of circumferentially arranged nozzles. Alternatively, the fluid booster 230 may be located on the intake manifold 122 upstream of the engine block 101. Figure 3 illustrates a cross sectional view of the fluid booster 230. The fluid booster may be ring-shaped and include an annular fluid space 310 disposed around the circumference of the manifold inlet supply pipe 235. Compressed fluid F from the fluid supply source 241, such as fluid tank 260b, flows through compressed fluid supply pipe 250 to enter the annular fluid space 310.

Compressed auxiliary fluid F may enter the manifold inlet supply pipe 235 from the annular fluid space 310 via nozzles 331, which may be generally arranged in a ring around the circumference of the manifold inlet supply 235. The nozzles 331 may be generally circumscribed by the fluid booster 230, forming the annular fluid space 310 around the nozzles. The nozzles 331 may be angled such that compressed fluid F flowing through the nozzles is directed downstream toward the intake manifold 122. In other embodiments, more than one ring of nozzles 331 may be arranged around the circumference of the manifold inlet supply 235 to provide a boost of fluid into the intake manifold 122. Additionally, it is possible that non-ring shape arrangements of nozzles 331 can be disposed on the fluid booster 230.

Compressed auxiliary fluid F exits the nozzles 331 at outlets 340, which may appear elliptical as a result of the angled arrangement of the nozzles. Nozzles 331 can be angled, for example, at 20-degrees from a longitudinal axis parallel to the manifold inlet supply pipe 235. Other suitable nozzle arrangements, such as the use of protruding nozzles, tubes of similar size, shape and diameter, tube of a different size, shape and diameter, a different number or position of tubes, different numbers, shapes, sizes and locations of holes, offset holes, can be used as known to one skilled in the art. In general, the smaller the nozzle holes, the faster the velocity of compressed fluid F through the nozzle holes. The velocity of the compressed fluid F may approach sonic velocity, however energy losses and noise generation occur at sonic velocity, so reaching sonic velocity may be avoided.

The fluid booster 230 may be a pneumatic venturi booster, where nozzles 331 entrain the compressed fluid F into the boost air and the EGR generating a negative pressure (vacuum) at an inlet-side 232 of the booster and a positive pressure at an outlet-side 231 of the booster. The vacuum may draw the EGR from the EGR conduit and may spool-up the turbine of the turbocharger 107 to draw in air towards the engine cylinders (1-6). The outlet mixture of air and EGR is directed to the intake manifold 122 to generate higher boost pressure.

Without wishing to be bound by any particular theory, it is believed that the nozzles 331 so angled, in the direction of downstream flow A, releases a strong burst of compressed fluid F in the direction of flow A to create the low pressure vacuum, which draws or encourages an increased flow of air from inlet air passage 115 into the intake manifold 122. The angled nozzles 331 provide a high pressure boost of air which draws additional intake air in the direction of flow A (Figure 3), which obviates the need to close the EGR valve 125 (Figure 1) to prevent back flow. That is, the fluid booster system 233 prevents the backflow of EGR in the EGR conduit without having to close the EGR valve 125. The flow of EGR in the EGR conduit may either be a forward flow or zero flow.

The auxiliary fluid F that is introduced into the intake of the engine 100 has a velocity vector v1 that is directed towards the intake or engine cylinder or in the downstream direction of flow A of the intake air and/or EGR, where the vector towards the intake or engine cylinder or direction of flow A is greater than a velocity vector (not shown) in the opposite direction (away from the intake or engine cylinder or in the upstream direction of flow). When the velocity vector of auxiliary fluid F is greater in the direction towards the intake (v1) than in the reverse direction, the auxiliary fluid draws increased flow of boost air towards the intake manifold 122 from the air intake 115. The inlet fluid booster system 233 does not restrict normal flow of air or EGR to the engine, or otherwise interfere with normal engine operations, when not in use.

In embodiments that include a turbocharger 107, the fluid booster system 233 increases the amount of air through the turbocharger to allow for a quicker turbocharger response. Further, the turbocharger compressor 107 spools as a result of the suction of air towards the manifold, whether there is exhaust gas through the turbocharger turbine or not. It is also possible that the turbocharger 107 may be an electrically powered turbocharger. In embodiments without a turbocharger 107, the fluid booster system may draw air from some other air source.

Generally at the same time as boost air is drawn through the manifold inlet supply pipe 235, the inlet fluid booster 230 may also draw a flow of exhaust gas from the EGR conduit 127. When both boost air and exhaust gas are drawn by the fluid booster system 233, the ratio of air to EGR for operation of the engine 100 may be generally maintained.

Using the inlet fluid booster system of the present invention, the engine launch off idle may require a short one to two second burst of air to allow the turbocharger to reach sufficient speed to build its own boost. The fluid booster system 233 may have a rapid blow-down of the fluid tanks 260a, 260b into the fluid booster 230, which may be accomplished through a high speed, high flow control valve 240 controlled by the EMC 280.

In operation, the EMC 280 acts as a central control system which monitors various components of the internal combustion engine. The fluid compressor 270 provides a flow of compressed fluid to either tanks 260a or 260b as regulated by fluid tank valve assembly 265 which is controlled by the EMC 280. Pressure sensors 266a and 266b, as illustrated in Figure 4, send signals 268a, 268b relaying information pertaining to pressure in tanks 260a and 260b respectively. When pressure in fluid tank 260a for the vehicle braking system is generally at 120 psi, compressed fluid from fluid compressor 270 is regulated by fluid tank valve assembly 265 to enter fluid tank 260b which serves as an fluid supply for the inlet fluid booster system. The EMC 280 can regulate additional fluid tanks, such as dedicated fluid tanks or fluid tanks for other auxiliary systems in a similar fashion. When the EMC 280 senses that a driver is depressing the accelerator pedal to accelerate from idle, the EMC sends an activation signal 367 (Figure 4) to activate the inlet fluid booster system by opening control valve 240 to allow fluid to flow to the fluid booster 230 to provide a burst of compressed fluid into the intake manifold 122.

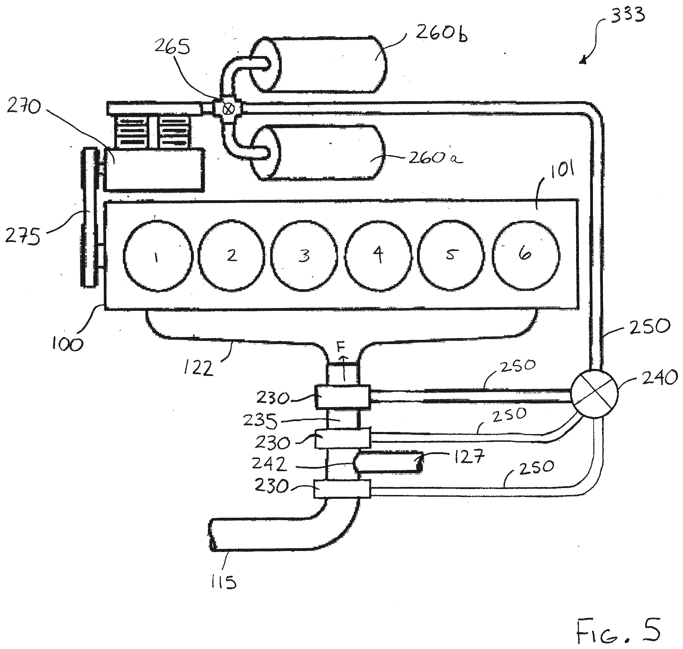

Turning now to Figures 5 -14, alternate configurations of the fluid booster system 233 - 1233 will be described. For ease of reference, the components of the alternate configurations 233 - 1233 will be described using the same reference numbers as the booster system 233 of Figure 2. Further, in all embodiments 233-1233 discussed below, the compressed auxiliary fluid F may be introduced into at least one of the inlet supply pipe 235, the air inlet passage 115, and the EGR conduit 127, all of which may prevent backflow of EGR in the EGR conduit, and may draw boost air to the intake manifold 122. Further, it is possible that the compressed auxiliary fluid F may be introduced directly at the engine cylinders (1 - 6). In all embodiments, the auxiliary fluid F is introduced such that it has a velocity vector v1 that is directed towards the intake or engine cylinder or in the downstream direction of flow A of the intake air and/or EGR, where the vector towards the intake or engine cylinder or direction of flow A is greater than a velocity vector (not shown) in the opposite direction (away from the intake or engine cylinder or in the upstream direction of flow).

Referring now to Figure 5, an alternate fluid booster system 333 includes a plurality of fluid boosters 230, which may be located on the inlet supply pipe 235 and the air inlet passage 115. The fluid boosters 230 may each have compressed fluid supply pipes 250 with one or more control valves 240. The fluid boosters 230 may be located upstream, downstream, or both upstream and downstream of the EGR intersection 242 with the inlet supply pipe 235. Introducing the compressed auxiliary fluid F into the inlet supply pipe 235 and the air inlet passage 115 may draw air into the air inlet passage 115 and may draw exhaust gas from the EGR conduit 127. The fluid boosters 230 may have the same shape and size or may have different shapes and sizes. Further, the fluid boosters 230 may be provided with compressed auxiliary fluid F from one or more fluid supply sources 241, for example the fluid tanks 260a, 260b.

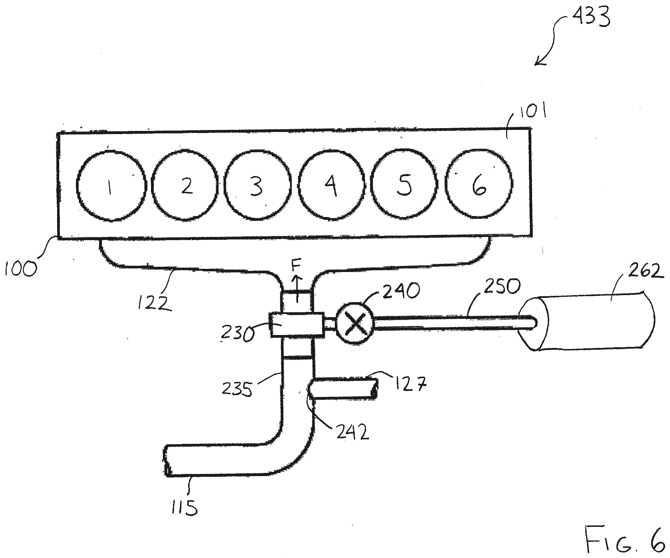

Referring now to Figure 6, a further fluid booster system 433 includes at least one fluid booster 230 located on the inlet supply pipe 235, where the fluid booster is in downstream fluid communication with one or more secondary sources 262, such as a dedicated fluid tank or a fluid tank used for other vehicle auxiliary functions.

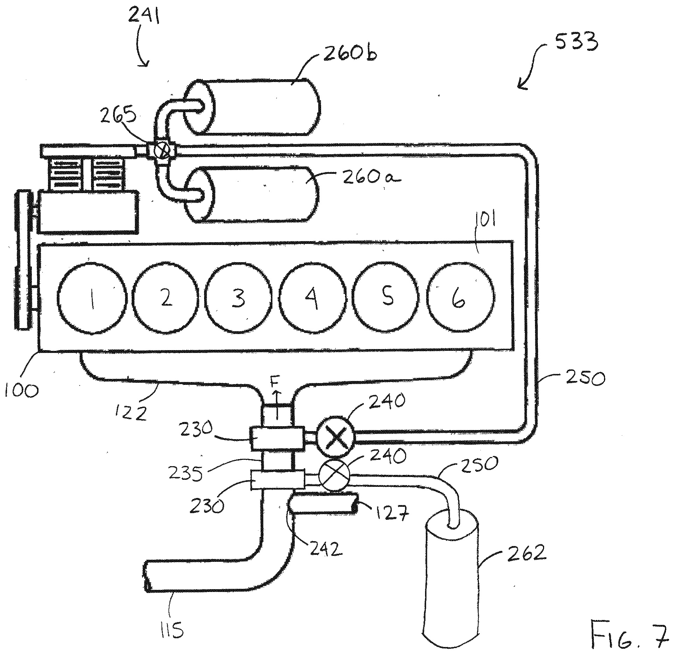

Referring now to Figure 7, a further fluid booster system 533 includes a plurality of fluid boosters 230 on the inlet supply pipe 235, where at least one of the fluid boosters is in downstream fluid communication with at least one of the fluid tanks 260a, 260b for the air brakes. A second fluid booster 230 is in downstream fluid communication with a secondary source 262, such as a dedicated fluid tank or a fluid tank used for other vehicle auxiliary functions. Each fluid booster 230 may have an associated control valve 240.

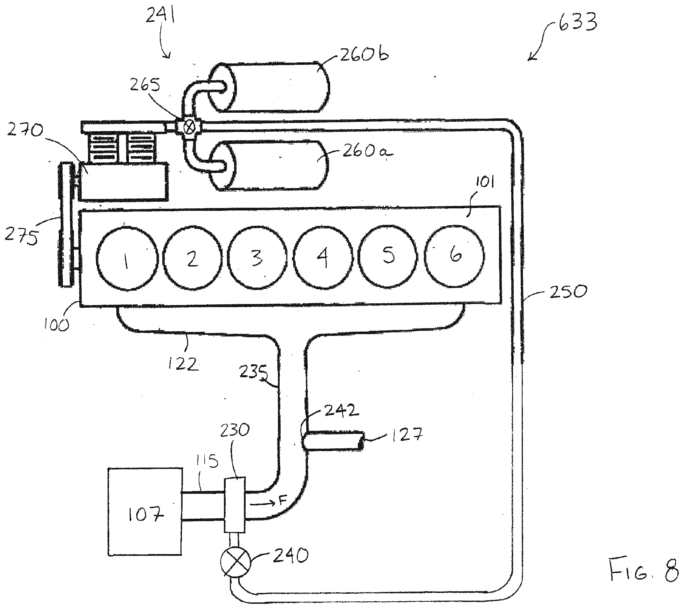

In Figure 8, at least one fluid booster 230 of the fluid booster system 633 is located on the air inlet passage 115 downstream of a turbocharger 107 and upstream of the EGR intersection 242. In an embodiment without a turbocharger 107, the fluid booster 230 is located on the air inlet passage 115 upstream of the EGR intersection 242. The fluid booster 230 may be provided with compressed auxiliary fluid F from one or more fluid supply sources 241, such as the fluid tanks 260a, 260b for the air brakes.

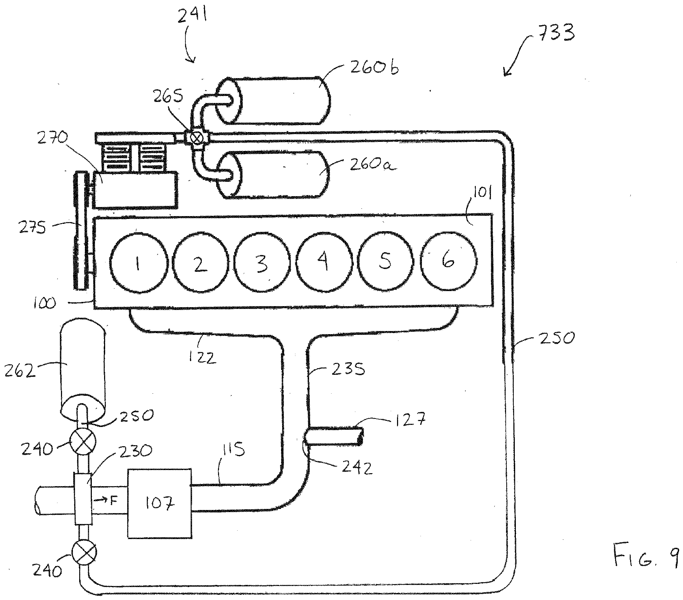

In Figure 9, at least one fluid booster 230 of the booster system 733 is disposed on the air inlet passage 115 upstream of a turbocharger 107. The fluid booster 230 may have one or more compressed fluid supply sources 241, such as one source from at least one of the fluid tanks 260a, 260b for the air brakes, and a secondary source 262, such as a dedicated tank or a tank for auxiliary functions. Each fluid booster 230 may have an associated control valve 240.

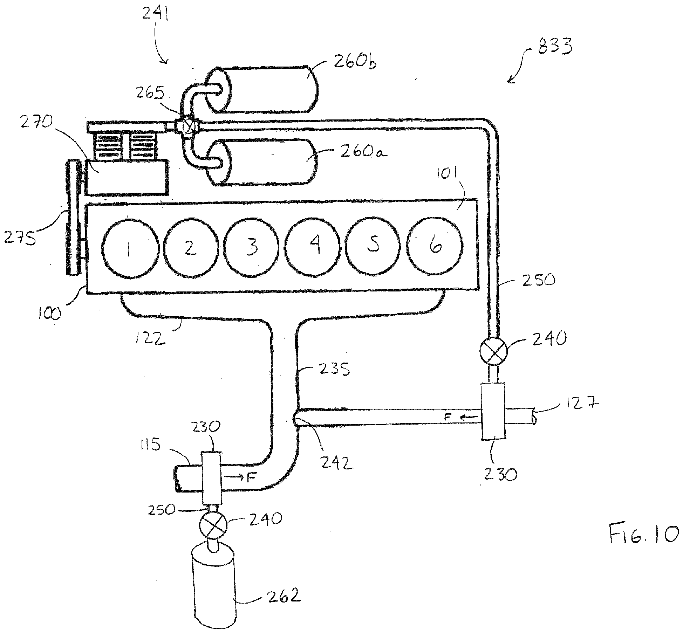

Referring to the fluid booster system 833 of Figure 10, multiple fluid boosters 230 may be disposed on multiple lines. A first fluid booster 230 may be located on the EGR conduit 127, and a second fluid booster 230 may be located on the air inlet passage 115. With the first fluid booster 230 on the EGR conduit 127, the compressed auxiliary fluid F may draw exhaust gas through the EGR conduit 127 into the inlet supply pipe 235. Each fluid booster 230 may have an associated control valve 240. The fluid boosters 230 may be provided with compressed fluid F from one or more fluid supply sources 241, including at least one of the fluid tanks 260a, 260b, and the secondary sources 262, such as dedicated tanks or tanks for auxiliary vehicle functions.

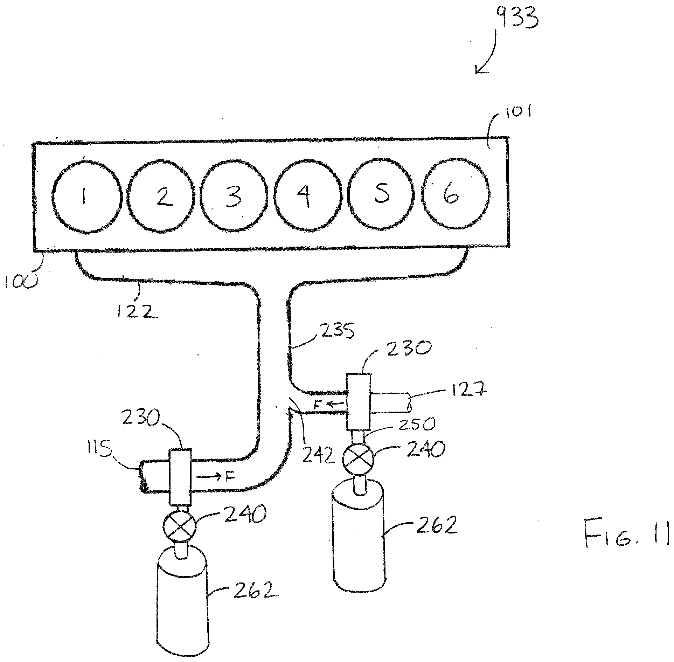

In Figure 11, multiple fluid boosters 230 of the fluid booster system 933 may be disposed on multiple lines, such as the EGR conduit 127 and the air inlet passage 115, and may receive compressed fluid from multiple secondary sources 262, or alternatively, from at least one fluid tank 260a, 260b.

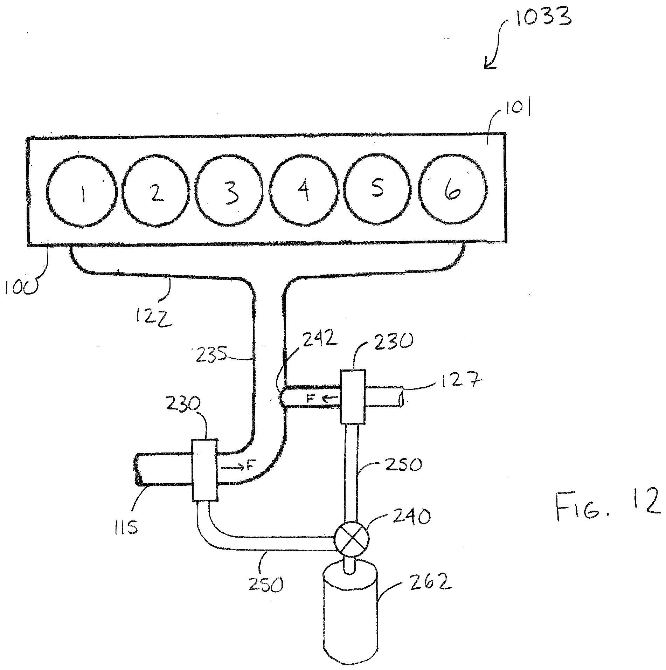

Referring to the fluid booster system 1033 of Figure 12, multiple fluid boosters 230 may be disposed on multiple lines, such as EGR conduit 127 and air inlet passage 115, and may receive compressed auxiliary fluid F from a single secondary source 262, or alternatively may receive compressed fluid from at least one fluid tank 260a, 260b.

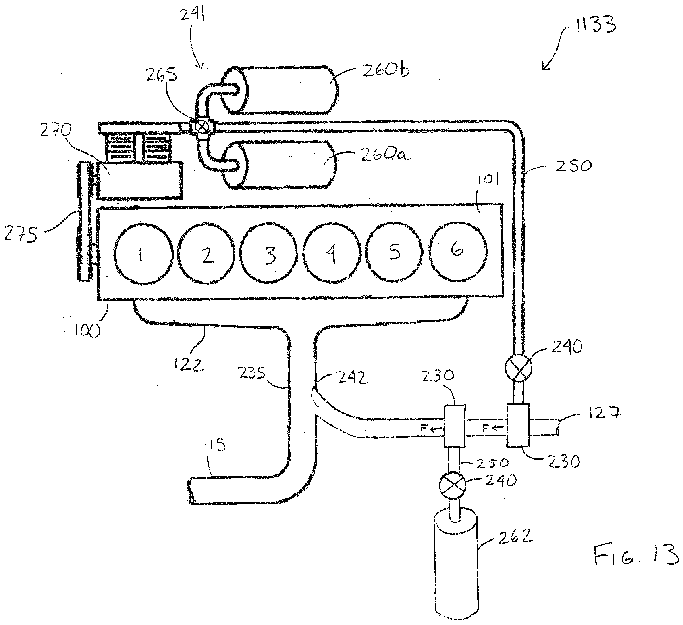

In the fluid booster system 1133 of Figure 13, a plurality of fluid boosters 230 are disposed on the EGR conduit 127 in series. The plurality of fluid boosters 230 may be provided with compressed air from one or more fluid supply sources 241, such as the fluid tanks 260a, 206b, and secondary sources 262, such as dedicated fluid tanks and fluid tanks for vehicle auxiliary functions. With the fluid boosters 230 disposed in a series arrangement, the change in pressure from inlet to outlet side of each booster is cumulative. The EGR conduit 127 may intersect with the inlet supply pipe 235 in such a configuration as to promote the flow of compressed auxiliary fluid F towards the intake manifold, and to draw air from the air inlet passage 115 into the intake manifold 122.

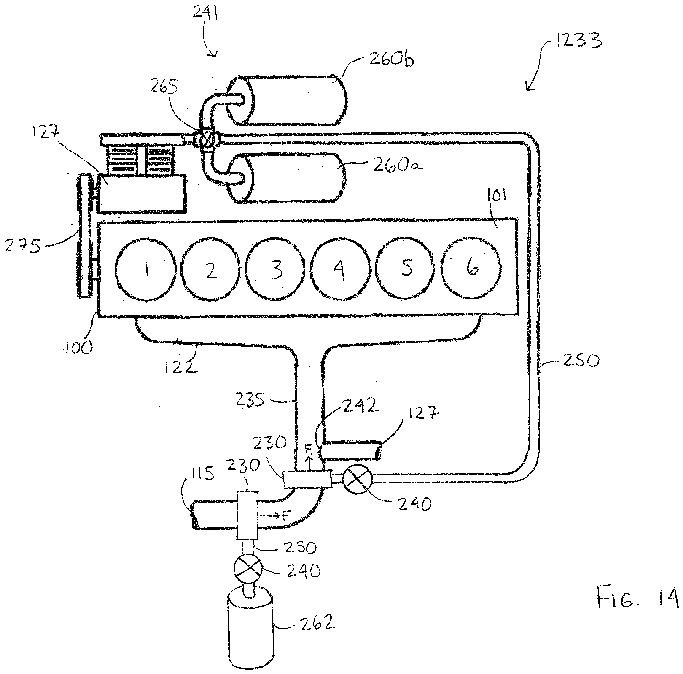

Referring to Figure 14, multiple fluid boosters 230 of the fluid booster system 1233 are disposed on the air inlet passage 115 upstream of the intersection 242 with the EGR conduit 127. The fluid boosters 230 may be provided with compressed auxiliary fluid F from one or more fluid supply sources 241.

It is possible that the fluid booster systems 233 - 1233 can have other arrangements that increase the amount of boost air through the air inlet passage 115, either from the turbocharger 107 or some other source, to provide air to the engine 100. The fluid booster systems 233 - 1233 introduce auxiliary fluid F having a velocity vector v1 towards the intake or engine cylinders or in the downstream direction of intake flow, that is larger than the velocity vector away from the intake or engine cylinders or in the upstream direction of flow.

Pressurized fluid F, such as air, that is stored in a fluid supply source 241, such as a storage tank for the air brake systems, fluid stored for auxiliary systems, or fluid stored and dedicated to the fluid booster system, may be utilized to both supplement the supplied air flow, such as from the turbocharger 107, and may be used to prevent backflow of EGR and to draw air flow toward the intake manifold 122. In embodiments with a turbocharger 107, the fluid booster system 233 - 1233 may allow the turbocharger to respond more rapidly during acceleration from steady state or idle, without requiring the closing of the EGR valve 125. The fluid booster systems 233 - 1233 also draws exhaust gas from the EGR conduit 127.

While the fluid booster 230 may be generally ring-shaped with nozzles 331, it is possible that the fluid booster can have any configuration that introduces the compressed fluid into the inlet supply pipe 235 (or directly into the intake manifold 122) that upon introduction of the compressed fluid, the fluid has a velocity vector v1 towards the intake or engine cylinders or in the downstream direction of intake flow, that is larger than the velocity vector away from the intake or engine cylinders or in the upstream direction of flow. Additionally, the fluid booster 230 may have any configuration that prevents the backflow of EGR and draws air from the air inlet air passage 115. For example, the fluid booster 230 may be a fan, compressors, injector nozzles, among any other devices for introducing compressed fluids. Additionally, it is possible that the fluid booster 230 may protrude into the passageway for communicating boost air. It is also possible that the fluid booster 230 can be used to draw additional fluids, for example the fluid booster 230 may draw hydrogen through the turbocharger 107, among other fluids at other locations upstream of the engine cylinders (1-6).

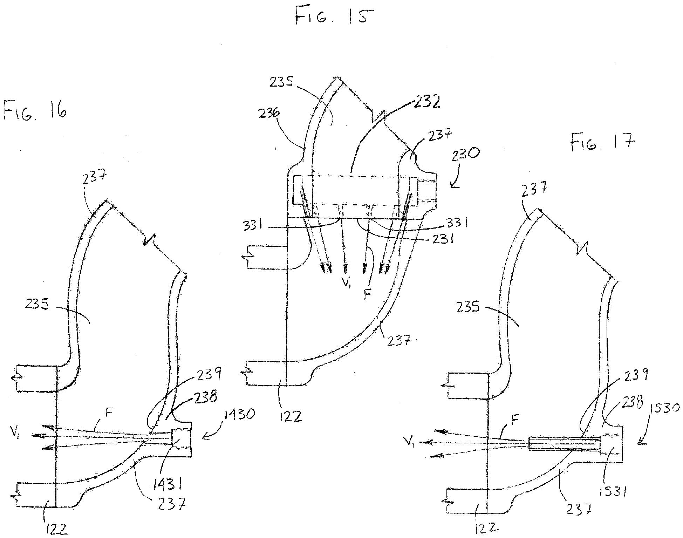

Referring to FIG. 15, the fluid booster 230 is located on a curved portion 236 of the inlet supply pipe 235 at or near the intake manifold 122, however it is possible that the curved portion can be located anywhere on any pipe in the fluid booster system. The curved portion 236 may be between two bends 237, or alternatively may be adjacent one or more bends, and the inlet supply pipe 235 may decrease in width at the outlet-side 231 of the booster 230. The nozzles 331 may entrain the compressed auxiliary fluid F into the boost air and the EGR generating a negative pressure (vacuum) at the inlet-side 232 of the booster and a positive pressure at the outlet-side 231 of the booster. That is, the velocity vector v1 in the direction towards the intake manifold 122 is greater than its velocity vector away from the intake manifold. To generate higher boost pressure, the outlet mixture of boost air and EGR is directed to the intake manifold 122.

Referring now to FIG. 16, an alternate fluid booster 1430 includes an ejector nozzle 1431 that is inset into a sidewall 238 of the inlet supply pipe 235, or any other pipe in the fluid booster system. Additionally, the fluid booster 1430 may be located on the bend 237 of the inlet supply pipe 235. The ejector nozzle 1431 may be formed into the casting, for example aluminum casting, and may be generally flush or may be recessed from a surface 239 of the sidewall 238.

The ejector nozzle 1431 may use a high velocity jet of fluid that is directed into the inlet supply pipe 235 or into the intake manifold 122, or into the cylinder head. Preferably, the ejector nozzle 1431 may be aimed at the center of the intake manifold 122. Flow of fluid from the ejector nozzle 1431 creates a low pressure region upstream of the ejector nozzle 1431 that draws in the fluids in the inlet supply pipe, for example air and EGR. The velocity vector v1 in the direction towards the intake manifold 122 is greater than its velocity vector away from the intake manifold, thereby causing flow towards the intake manifold 122. Although a single ejector nozzle 1431 is shown, it is possible that multiple ejector nozzles can be used.

As may be seen in FIG. 16, the velocity vector v1 has a radial component that is in an outward direction from the ejector nozzle 1431 towards a perimeter of the intake manifold 122. The radial component of the velocity vector v1 additionally helps to prevent back flow by ensuring that fluid F from the ejector nozzle 1431 is spread throughout the cross-section of the intake manifold 122.

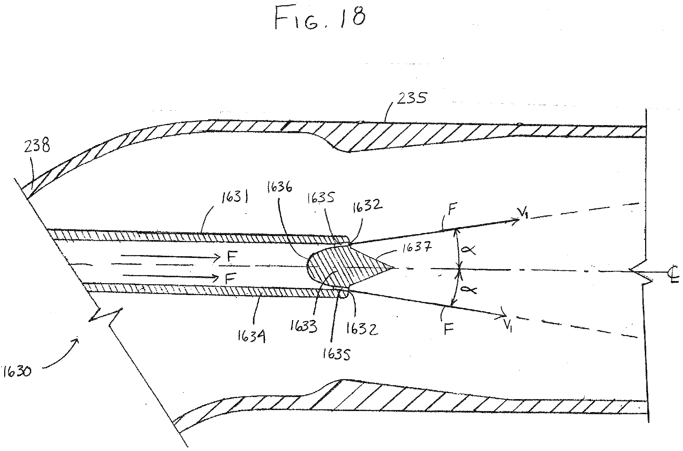

Referring now to FIG. 17, an alternate fluid booster 1530 includes an extended ejector nozzle 1531 that extends from the sidewall 238 of the inlet supply pipe 235, or any other pipe in the fluid booster system. The fluid booster 1530 may be located on the bend 237 of the inlet supply pipe 235. In FIG. 17, the extended ejector nozzle 1531 extends out from the surface 239 of the sidewall 238 and into the interior of the inlet supply pipe 235. The length of the extended ejector nozzle 1531 may vary, and may extend to the inlet of the intake manifold 122. Although the extended ejector nozzle 1531 is shown in FIG. 18 as a straight tube, it is possible that the nozzle can have other shapes and sizes, for example could be curved or tapered.

The ejector nozzle 1531 may use a high velocity jet of fluid that is directed into the inlet supply pipe 235 or into the intake manifold 122, or into the cylinder head. Similar to the ejector nozzle 1431, the ejector nozzle 1531 may be aimed at the center of the intake manifold 122. Flow of fluid from the ejector nozzle 1531 creates a low pressure region upstream of the ejector nozzle 1531 that draws in the fluids in the inlet supply pipe, for example air and EGR. The velocity vector v1 in the direction towards the intake manifold 122 is greater than its velocity vector away from the intake manifold, thereby causing flow towards the intake manifold 122. Although a single ejector nozzle 1531 is shown, it is possible that multiple ejector nozzles can be used.

An alternate fluid booster 1630 is shown in FIG. 18 and includes an extended ejector nozzle 1631 having multiple nozzle apertures 1632 disposed at the distal end of the nozzle. In FIG. 18, the extended ejector nozzle 1631 extends out from the sidewall 238 and into a narrowed, venturi throat portion of the inlet supply pipe 235, or any other conduit in the fluid booster system. Although the extended ejector nozzle 1631 is shown in FIG. 18 as a straight tube, it is possible that the nozzle can have other shapes and sizes, for example could be curved or tapered.

A tip 1633 is disposed at the distal end of the ejector nozzle 1631. Together with a nozzle housing 1634, the tip 1633 defines multiple fluid passageways 1635 concentrically located about the tip that are in fluid communication with the apertures 1632 and the interior of the inlet supply pipe 235. Generally circumscribing the centerline of the ejector nozzle 1631, the tip 1633 may have a rounded interior portion 1636 to direct the compressed fluid F towards the multiple fluid passageways 1635, and may have a pointed exterior portion 1637, giving the tip a foil-shape.

The passageways 1635 are disposed at an angle α from the centerline of the ejector nozzle 1631, and may also be disposed at an angle α from the centerline of the inlet supply pipe 235 or other conduit. When compressed fluid F is emitted from the ejector nozzle 1631, the fluid exits the apertures 1632 generally having the velocity vector v1 disposed at angle α, which is toward the intake of the engine. With the multiple apertures 1632 disposed at the same angle about the tip 1633, the ejector nozzle 1631 evenly distributes the compressed fluid F into the cross-section of the throat. The distribution of the fluid F into the cross-section of the throat

It is possible that any fluid booster 230, 1430, 1530, 1630 can be incorporated on any of the fluid booster systems 233 - 1233. The fluid booster systems 233-1233 are manufactured by sealingly connecting the inlet supply pipe 235 to the intake manifold 122 of the engine 100 to provide fluid communication of air from an air inlet 117 and EGR from an EGR conduit 124. The EGR conduit 124 may be sealingly connected to the inlet supply pipe 235 or to the inlet air passage 117. At least one fluid booster 230, 1430, 1530, 1630 is assembled to at least one of the inlet supply pipe 235, the EGR conduit 124 and the air inlet 117. Assembly of the fluid booster 230, 1430, 1530, 1630 may include inserting the ejector nozzle-type booster into one of the pipes/conduits, or may include concentrically locating the ring-type booster about one of the pipes/conduits, among other methods of assembly. The compressed fluid supply source 241 is mounted to the vehicle, and may include fluid tanks for the vehicle's air brakes, dedicated fluid tanks, or fluid tanks for other auxiliary systems. To provide fluid communication between the fluid supply source 241 and the booster 230, 1430, 1530, 1630, the fluid supply pipe 250 is connected to both the fluid supply source and to the booster. At least one valve is 265 assembled on the fluid supply pipe 250 between the supply source 241 and the booster 230, 1430, 1530, 1630.

The fluid booster systems 233 - 1233 may result in increased mixing of air and EGR, increased EGR and boost air flow during transient conditions, and maintaining relatively low NOx emissions during transient conditions, such as during acceleration from idle. When the engine 100 experiences transient conditions, the fluid booster system 233-1233 may be initiated to communicate the compressed fluid F to the fluid booster 230, 1430, 1530, 1630 for introduction of the compressed fluid into the passageway upstream of the engine cylinders. Further, the fluid booster systems 233 - 1233 may result in a reduction in time to a target torque, and a reduction in transient smoke. It is possible that the fluid booster systems 233 - 1233 can be used as a fan to cool the engine 100, such as when the vehicle is sitting idle.

Turning now to FIG. 19, a portion of a control strategy 1700 for an inlet fluid booster, such as inlet fluid booster 230, 1430, 1530, 1630 described above. The control strategy 1700 operates to selectively use compressed fluid stored in a fluid tank, such as fluid tanks 260a, 260b to provide additional flow through the air intake system 103 when a deficiency in the quantity of fresh air entering the air intake system 103 is detected.

Control strategy 1700 compares an intake airflow feedback indication 1702 with a predetermined minimum required airflow 1704 at a summation device 1706. The airflow feedback indication 1702 may be generated in a variety of ways that include directly measuring airflow, or calculating an estimated airflow. For instance, an air/fuel ratio may be monitored to indicate an amount of airflow occurring through the air intake system. Alternatively, intake manifold oxygen concentration may be measured to calculate airflow through the intake manifold. Additionally, intake manifold pressure may be measured to estimate the airflow rate within the air intake system. Further, a maximum mass fuel delivery to limit particulate emissions may also be utilized to determine airflow through the air intake system. Other contemplated ways to determine airflow through the air intake system include, measuring oxygen concentration in engine exhaust, measuring flow in the air intake system, and measuring exhaust flow. The minimum required airflow 1704 is typically stored in a lookup table stored in a memory device. The minimum required airflow 1704 varies based on engine operating conditions, and typically is a function of at least one of engine speed, engine load, engine temperature, throttle position, diesel particulate filter regeneration state in order to produce minimum required air fuel ratios, intake manifold oxygen concentrations, and/or minimum intake manifold pressures, or other parameters discussed above with respect to the airflow feedback indication 1702.

The summation device 1706 generates an output, DELTA_AIR, indicative of the difference between the airflow feedback indication 1702 and the minimum required airflow 1704. DELTA_AIR is compared to an inlet fluid booster deactivation threshold 1710 at comparator 1708. The deactivation threshold 1710 is stored in a memory and indicates that fluid flow from the inlet fluid booster is not required. The comparator 1708 determines whether DELTA_AIR is greater than the deactivation threshold 1710, and if so generates an output to stop flow from the inlet fluid booster, or to simply not activate the inlet fluid booster, depending on the operational state of the inlet fluid booster.

DELTA_AIR is also compared to an inlet fluid booster activation threshold 1714 at a comparator 1712. The activation threshold 1714 is sorted in a memory and indicates that fluid flow from the inlet fluid booster is required. The comparator 1712 determines whether DELTA_AIR is less than the activation threshold 1714, conditions are appropriate for activation of the inlet fluid booster, such as an inadequate amount of air entering the intake system. A timer 1716 is initiated when the comparator 1712 determines that conditions are appropriate for activation of the inlet fluid booster.

In order to ensure that the inlet fluid booster has an adequate amount of fluid to release into the intake system, pressure of a fluid reservoir is monitored as shown at blocks 1718. In a system that utilizes compressed air of a system, such as a pneumatic braking system of a vehicle, pressure of a fluid reservoir is monitored. The pressure of the fluid reservoir 1718 is utilized in a maximal fluid booster activation duration calculator 1720. The maximal fluid booster activation duration calculator 1720 determines a length of time the fluid booster may be operated with fluid from the fluid reservoir, before the fluid reservoir reaches a threshold fluid pressure that requires operation of the inlet fluid booster to cease. For example, if the fluid reservoir is utilized by the braking system of the vehicle, a minimum pressure to provide an emergency stop of the vehicle may be set as the threshold fluid pressure, and the amount of time of booster operation to diminish the pressure within the reservoir to that threshold level is determined by the maximal fluid booster activation duration calculator.

Similarly, a booster activation delay calculator 1722 is provided to ensure that a fluid reservoir pressure 1718 is above a threshold value prior to activation of the inlet fluid booster. The booster activation delay calculator 1722 utilizes the pressure of the fluid reservoir 1718 to ensure that a sufficient quantity of fluid is present within the reservoir to allow the inlet fluid booster to operate. The booster activation delay calculator 1722 determines a time required for the pressure within the fluid reservoir 1718 to rise above a threshold value to allow the inlet fluid booster to receive fluid from the fluid reservoir.

Output of the timer 1716 and output of the maximal fluid booster activation duration calculator 1720 are input to a comparator 1724. The comparator 1724 determines whether output of the timer 1716 is greater than the output of the maximal fluid booster activation duration calculator 1720. If the comparator 1724 determines that the output of the timer is 1716 is greater, a signal is sent to a relay 1728. The relay 1728 additionally receives input from the comparator 1708. The relay 1728 is in communication with a inlet fluid booster controller 1730. The relay 1728 communicates to the inlet fluid booster controller 1730 that operation of the inlet fluid booster should be halted.

Output of the timer 1716 and output of the booster activation delay calculator 1722 are input to a comparator 1726. The comparator 1726 determines if the output of the timer 1716 is greater than the output of the booster activation delay calculator 1722, and when the such a situation occurs, the comparator communicates to the inlet fluid booster controller 1730 to initiate operation of the inlet fluid booster.

Additionally, FIG. 19 discloses turbocharger surge protection functionality. Turbocharger surge is a condition that results when a flow of pressurized air from the compressor of the turbocharger is not able to be completely fed into an engine, or vented to the atmosphere, and pressure builds within the air intake system to a point where the movement of the turbocharger compressor can actually stop, as the exhaust flow is not generating enough power with the turbocharger turbine to overcome this back pressure and turn the compressor. Turbocharger surge can severely damage a turbocharger.

Turbocharger compressor mass flow 1732 is determined. The turbocharger compressor mass flow 1732 may be a measured value, or may be calculated. The turbocharger compressor mass flow 1732 may be a corrected compressor mass flow, based upon the turbocharger compressor map of the particular turbocharger. The turbocharger compressor mass flow 1732 is input to a turbocharger compressor surge calculator 1734. The turbocharger compressor surge calculator 1734 is a function of turbocharger compressor mass flow 1732 and pressure. The output of the turbocharger compressor surge calculator 1734 generates a maximal compressor pressure ratio 1736. The maximal compressor pressure ratio 1736 is a threshold value to indicate the maximum compressor pressure ratio before surge occurs. The actual turbocharger compressor pressure ratio 1740 is determined. The actual compressor pressure ratio 1740 may be measured or calculated. A summation device 1742 subtracts the actual compressor pressure ratio 1740 from the maximal compressor pressure ratio 1736, and outputs this value to a comparator 1744. The comparator 1744 additionally receives an input of a surge deactivation threshold 1738. The surge deactivation threshold 1738 is stored in a memory, and may be in a look-up table that contains a variety of surge deactivation thresholds 738 based upon engine operating conditions. The comparator 1744 determines if the output of the summation device 1742 is less than the surge deactivation threshold 1738, and generates an output to the relay 1728 when the comparator 1744 determines that the output of the summation device 1742 is less than the surge deactivation threshold 1738. This causes the fluid boost controller 1730 to halt operation of the inlet fluid booster.

It will be understood that a control system may be implemented in hardware to effectuate the method. The control system can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

When the control system is implemented in software, it should be noted that the control system can be stored on any computer readable medium for use by or in connection with any computer related system or method. In the context of this document, a "computer-readable medium" can be any medium that can store, communicate, propagate, or transport the program for use by or in connection with the instruction execution system, apparatus, or device. The computer readable medium can be, for example, but is not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical) and a portable compact disc read-only memory (CDROM) (optical). The control system can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

From the foregoing, it will be observed that numerous variations and modifications may be effected without departing from the spirit and scope of the invention. It is to be understood that no limitation with respect to the specific apparatus illustrated herein is intended or should be inferred.

All references, including publications, patent applications, and patents, cited herein are hereby incorporated by reference to the same extent as if each reference were individually and specifically indicated to be incorporated by reference and were set forth in its entirety herein, except where inconsistent with the present disclosure.

In particular the invention relates to the following aspects:
According to a first aspect an inlet fluid booster system for an internal combustion engine having engine cylinders, the inlet fluid booster system comprising:
   an inlet fluid booster injector being disposed within an air intake system of an engine, the inlet fluid booster having a plurality of annularly arranged nozzles disposed about a periphery of the inlet fluid booster injector; and
   a compressed fluid supply source in fluid communication with the inlet fluid booster injector;
   wherein the compressed fluid is selectively introduced from the inlet fluid booster injector with a velocity vector directed at least partially towards the engine cylinders.

This aspect may be improved by an inlet fluid booster system wherein the inlet fluid booster injector is disposed downstream of a turbocharger compressor.

This aspect may be additionally or alternatively improved by an inlet fluid booster systemwherein the inlet fluid booster injector is disposed downstream of an exhaust gas recirculation valve.

This aspect may be additionally or alternatively improved by an inlet fluid booster system wherein the annularly arranged nozzles are disposed at an angle relative to a portion of the air intake system adjacent the inlet fluid booster injector, the angle imparting a velocity vector at least partially towards a periphery of the air intake system.

This aspect may be additionally or alternatively improved by an inlet fluid booster systemwherein the velocity vector at least towards a periphery of the air intake system allows fluid from the inlet fluid booster injector to contact the periphery of the air intake system.

This aspect may be additionally or alternatively improved by an inlet fluid booster systemwherein the compressed fluid introduced from the inlet fluid booster injector generates a region having a lower fluid pressure adjacently upstream of the fluid inlet booster injector.

This aspect may be additionally or alternatively improved by an inlet fluid booster systemwherein the inlet fluid booster injector is disposed adjacent to a venturi formed within the air intake system.

This aspect may be additionally or alternatively improved by an inlet fluid booster systemwherein the selective introduction of compressed fluid increases fluid flow through an exhaust gas recirculation system of the engine.

This aspect may be additionally or alternatively improved by an inlet fluid booster systemwherein the selective introduction of compressed fluid increases fluid flow through a turbocharger compressor of the engine.

This aspect may be additionally or alternatively improved by an inlet fluid booster systemwherein the selective introduction of compressed fluid is performed with an exhaust gas recirculation valve is in an open position.

This aspect may be additionally or alternatively improved by an inlet fluid booster system wherein the compressed fluid supply source comprises a compressed air reservoir.

This aspect may be additionally or alternatively improved by an inlet fluid booster system wherein the compressed fluid comprises air.

This aspect may be additionally or alternatively improved by an inlet fluid booster system wherein the inlet fluid booster injector is disposed generally at a center of a conduit of the air intake system.

According to a second aspect an inlet fluid booster system for an internal combustion engine having engine cylinders, the inlet fluid booster system comprising:
an annular inlet fluid booster being disposed within an air intake system of an engine, the inlet fluid booster having a plurality of nozzles disposed on about an inner periphery of the annular inlet fluid booster; and
a compressed fluid supply source in fluid communication with the inlet fluid booster injector;
wherein the compressed fluid is selectively introduced from the annular inlet fluid booster with a velocity vector at least partially towards the engine cylinders.

The inlet fluid booster system of the second aspect may be improved, wherein the nozzles are disposed at an angle relative to a portion of the air intake system adjacent the inlet fluid booster injector, the angle imparting a velocity vector at least partially towards a center of the air intake system.

The inlet fluid booster system of the second aspect may additionally or alternatively be improved, wherein the velocity vector at least towards the center of the air intake system allows fluid from the inlet fluid booster to reach the center of the air intake system.

The inlet fluid booster system of of the second aspect may additionally or alternatively be improved, wherein the selective introduction of compressed fluid increases fluid flow through an exhaust gas recirculation system of the engine.

The inlet fluid booster system of of the second aspect may additionally or alternatively be improved, wherein the selective introduction of compressed fluid increases fluid flow through a turbocharger compressor of the engine.

The inlet fluid booster system of of the second aspect may additionally or alternatively be improved, wherein the selective introduction of compressed fluid is performed with an exhaust gas recirculation valve is in an open position.

The inlet fluid booster system of of the second aspect may additionally or alternatively be improved, wherein the compressed fluid supply source comprises a compressed air reservoir.

The inlet fluid booster system of of the second aspect may additionally or alternatively be improved, wherein the compressed fluid comprises air.

According to a third aspect an inlet fluid booster system for an internal combustion engine, the internal combustion engine having an air inlet passage in upstream fluid communication from an intake manifold, where the intake manifold is upstream of engine cylinders, comprising:
at least one compressed fluid supply source;
a fluid booster in fluid communication with the compressed fluid supply source, the at least one fluid booster disposed upstream of the intake manifold and downstream of an exhaust gas recirculation valve, the fluid booster being disposed in fluid communication with the intake manifold;
at least one control valve upstream of the at least one fluid booster for selectively permitting the flow of compressed fluid from the compressed fluid supply source to the at least one fluid booster;
wherein the selective introduction of compressed fluid from the fluid booster draws an increased flow of boost air and recirculated exhaust gas through the air inlet passage to the intake manifold.

The system of the third aspect may be improved, wherein the at least one fluid booster comprises a fluid booster injector, the inlet fluid booster having a plurality of annularly arranged nozzles disposed about a periphery of the inlet fluid booster injector.

The system of the third aspect may additionally or alternatively be improved, wherein the at least one fluid booster comprises an annular inlet fluid booster, the annular inlet fluid booster having a plurality of nozzles disposed on about an inner periphery of the annular inlet fluid booster..

The system of the third aspect may additionally or alternatively be improved, wherein the at least one fluid booster is disposed on an exhaust gas recirculation conduit.

The system of the third aspect may additionally or alternatively be improved, wherein the compressed fluid supply source comprises a fluid tank, wherein the fluid tank is pressurized with fluid by an engine driven compressor.

The system according of the third aspect may additionally or alternatively be improved, wherein the compressed fluid supply source comprises a fluid tank dedicated to the fluid booster system.

A fourth aspect of the invention relates to a method of increasing air flow to an internal combustion engine having an air inlet passage in fluid connection with engine cylinders, the method comprising the steps of:
fluidly connecting a compressed fluid supply source that supplies compressed auxiliary fluid to an inlet fluid booster in an intake passage upstream of the engine cylinders;
determining an amount of air passing through the air inlet passage;
selectively delivering the compressed auxiliary fluid to the inlet fluid booster in the an intake passage upstream of the engine cylinders when the amount of air is below a predefined threshold; and
drawing boost air and exhaust gas recirculation through the air inlet passage when the compressed auxiliary fluid is delivered to the inlet fluid booster upstream of the engine cylinders.

The method of the fourth aspect may be improved, wherein the delivering the compressed auxiliary fluid creates a low pressure region upstream of the inlet fluid booster.

The method of the fourth aspect my additionally or alternatively improved, wherein the delivering the compressed auxiliary fluid creates fluid flow with a velocity vector towards the engine cylinders to prevent backflow within the intake passage.

The method of the fourth aspect my additionally or alternatively improved, wherein the delivering the compressed auxiliary fluid creates fluid flow with a velocity vector towards a sidewall of the intake passage to prevent backflow within the intake passage.

The method of the fourth aspect my additionally or alternatively improved, wherein the delivering the compressed auxiliary fluid creates fluid flow with a velocity vector towards a center of the intake passage to prevent backflow within the intake passage.

The method of the fourth aspect my additionally or alternatively improved, wherein the determining an amount of air passing through the air inlet passage is based on pressure within air inlet passage.

The method of the fourth aspect my additionally or alternatively improved, wherein the determining an amount of air passing through the air inlet passage is based on oxygen content within air inlet passage.

The method of the fourth aspect my additionally or alternatively improved, wherein the determining an amount of air passing through the air inlet passage is based on oxygen content within exhaust from the engine.

The method of the fourth aspect my additionally or alternatively improved, wherein the determining an amount of air passing through the air inlet passage is based on output of a flow sensor within the air inlet passage.

A fifth aspect relates to a method of operating an inlet fluid booster in an intake system of an internal combustion engine comprising:
determining a difference between air flow conditions within an air intake system and a stored minimum air flow based upon existing engine operating conditions;
comparing the difference between air flow conditions within the air intake system and the stored minimum air flow based upon existing engine operating conditions to first threshold value and a second threshold value;
initiating fluid flow from an inlet fluid booster when an outcome of the comparing the difference between air flow conditions within the air intake system and the stored minimum air flow based upon existing engine operating conditions is less than the first threshold value; and
deactivating fluid flow from the inlet fluid booster when an outcome of the comparing the difference between air flow conditions within the air intake system and the stored minimum air flow based upon existing engine operating conditions is greater than the second threshold value.

The method of the firth aspect may further comprise:
determining a maximal time period for fluid flow from the inlet fluid booster based upon pressure within a fluid reservoir;
comparing the maximal time period to output of a timer started upon activation of the inlet fluid booster;
deactivating fluid flow from the inlet fluid booster when the output of the timer equals the maximal time period.

The method of the firth aspect may further comprise:
determining a delay period for initiating fluid flow from the inlet fluid booster based upon pressure within a fluid reservoir;
comparing the delay period to output of a timer started upon determination that the difference between air flow conditions within the air intake system and the stored minimum air flow based upon existing engine operating conditions is less than the first threshold value; and
initiating fluid flow from the inlet fluid booster when the output of the timer equals the delay period.

The method of the firth aspect may further comprise:
determining a difference between a maximal turbocharger compressor pressure ratio based upon engine operating conditions and an observed turbocharger compressor pressure ratio;
comparing the difference between the maximal turbocharger compressor pressure ratio based upon engine operating conditions and the observed turbocharger compressor pressure ratio to a third threshold value;
deactivating fluid flow from the inlet fluid booster when difference between the maximal turbocharger compressor pressure ratio based upon engine operating conditions and the observed turbocharger compressor pressure ratio is less than the third threshold value.

## Claims

1. An inlet fluid booster system for an internal combustion engine having engine cylinders, the inlet fluid booster system comprising:
an inlet fluid booster injector being disposed within an air intake system of an engine, the inlet fluid booster having a plurality of annularly arranged nozzles disposed about a periphery of the inlet fluid booster injector; and
a compressed fluid supply source, especially a compressed air reservoir, in fluid communication with the inlet fluid booster injector;
wherein the compressed fluid, especially compressed air, is selectively introduced from the inlet fluid booster injector with a velocity vector directed at least partially towards the engine cylinders.

2. The inlet fluid booster system of claim 1, wherein the inlet fluid booster injector is disposed downstream of a turbocharger compressor and/or downstream of an exhaust gas recirculation valve and/or adjacent to a venturi formed within the air intake system.

3. The inlet fluid booster system of claim 1, wherein the annularly arranged nozzles are disposed at an angle relative to a portion of the air intake system adjacent the inlet fluid booster injector, the angle imparting a velocity vector at least partially towards a periphery of the air intake system, especially allowing fluid from the inlet fluid booster injector to contact the periphery of the air intake system.

4. The inlet fluid booster system of claim 1, wherein the compressed fluid introduced from the inlet fluid booster injector generates a region having a lower fluid pressure adjacently upstream of the fluid inlet booster injector.

5. The inlet fluid booster system of claim 1, wherein the selective introduction of compressed fluid increases fluid flow through an exhaust gas recirculation system of the engine and/or through a turbocharger compressor of the engine.

6. The inlet fluid booster system of claim 1, wherein the selective introduction of compressed fluid is performed with an exhaust gas recirculation valve is in an open position.

7. The inlet fluid booster system of claim 1, wherein the inlet fluid booster injector is disposed generally at a center of a conduit of the air intake system.

8. A method of increasing air flow to an internal combustion engine having an air inlet passage in fluid connection with engine cylinders, the method comprising the steps of:
fluidly connecting a compressed fluid supply source that supplies compressed auxiliary fluid to an inlet fluid booster in an intake passage upstream of the engine cylinders;
determining an amount of air passing through the air inlet passage;
selectively delivering the compressed auxiliary fluid to the inlet fluid booster in the an intake passage upstream of the engine cylinders when the amount of air is below a predefined threshold; and
drawing boost air and exhaust gas recirculation through the air inlet passage when the compressed auxiliary fluid is delivered to the inlet fluid booster upstream of the engine cylinders.

9. The method of claim 8, wherein the delivering the compressed auxiliary fluid creates a low pressure region upstream of the inlet fluid booster.

10. The method of claim 8, wherein the delivering the compressed auxiliary fluid creates fluid flow with a velocity vector towards the engine cylinders to prevent backflow within the intake passage.

11. The method of claim 8, wherein the delivering the compressed auxiliary fluid creates fluid flow with a velocity vector towards a sidewall of the intake passage to prevent backflow within the intake passage.

12. The method of claim 8, wherein the delivering the compressed auxiliary fluid creates fluid flow with a velocity vector towards a center of the intake passage to prevent backflow within the intake passage.

13. The method of claim 8, wherein the determining an amount of air passing through the air inlet passage is based on pressure within air inlet passage and/or .

14. The method of claim 8, wherein the determining an amount of air passing through the air inlet passage is based on oxygen content within air inlet passage and/or within exhaust from the engine.

15. The method of claim 8, wherein the determining an amount of air passing through the air inlet passage is based on output of a flow sensor within the air inlet passage.
